# EUROPEAN PATENT SPECIFICATION

(11) **EP 4 480 205 B1**
(45) Date of publication and mention of the grant of the patent: **11.06.2025**
(21) Application number: 22710493.2
(22) Date of filing: 15.02.2022
(51) Int. Cl.: H04W 12/30, H04L 9/08

(54) **NETWORK SLICE MANAGEMENT AND SECURITY**
NETZWERKSCHICHTVERWALTUNG UND -SICHERHEIT
GESTION ET SÉCURITÉ DE TRANCHE DE RÉSEAU

(43) Date of publication of application: 25.12.2024
(73) Proprietor: Telefonaktiebolaget LM Ericsson (publ), 164 83 Stockholm (SE)
(72) Inventor: CELOZZI, Giuseppe, 80125 Napoli (IT); PICARO, Pietro, 04023 Formia (IT)
(74) Representative: Ericsson
(86) International application number: PCT/EP2022/053693
(87) International publication number: WO 2023/155977

(56) References cited:
- WRIGHT PAUL ET AL: "5G network slicing with QKD and quantum-safe security", JOURNAL OF OPTICAL COMMUNICATIONS AND NETWORKING, IEEE, USA, vol. 13, no. 3, 1 March 2021 (2021-03-01), pages 33 - 40, XP011833668, ISSN: 1943-0620, [retrieved on 20210121], DOI: 10.1364/JOCN.413918
- "Security requirements and architecture for network slice management and orchestration; X.1047 (10/21)", no. X.1047 (10/21), 29 October 2021 (2021-10-29), pages 1 - 56, XP044326903, Retrieved from the Internet <URL:http://mirror2.itu.int/dms/pay/itu-t/rec/x/T-REC-X.1047-202110-I!!PDF-E.pdf> [retrieved on 20211126]
- N/A: "ITU-T Security guidelines for applying quantum-safe algorithms in IMT-2020 systems", 30 April 2021 (2021-04-30), pages 1 - 52, XP055963083, Retrieved from the Internet <URL:https://www.itu.int/rec/dologin_pub.asp?lang=e&id=T-REC-X.1811-202104-I!!PDF-E&type=items> [retrieved on 20220920], DOI: 11.1002/1000/14454

## Description

### Technical Field

The present application relates to a method for operating a network slice management function configured to manage a network slice of a cellular network, to a communication network device hosting the corresponding network slice management function, to a method for operating a security management entity configured to orchestrate network slices in a cellular network, to a communication device hosting the corresponding security management entity, to a method for operating a network component of a cellular network and to a communication network device hosting the corresponding network component. Furthermore, a system comprising the communication network device hosting the network slice management function and communication network device hosting the security manager entity is provided, a computer program comprising program code and a carrier comprising the computer program.

### Background

5G technology is the latest evolution of mobile telecommunication. It improves 4G (and all previous mobile technologies), in particular 5G improves: Data transmission speed; Bandwidth; and Latency.

Due to its characteristics, 5G will be applied in fields that up until now have not been suitable for mobile technology, such as applications requiring ultra-low latency, mission critical applications, etc. In addition, some applications like remote surgery and +autonomous vehicles, will require High Availability (HA) levels not satisfied by the current telecom infrastructure. 5G communication should provide automation in vertical domains that necessitate high reliability and high communication service availability. Moreover, the latter and other services may run in parallel on the same 5G infrastructure. This parallel use is achieved through slicing.

Network Slices, which need very low latency, ultra-reliability and very high availability, are for example related to the following services (URLLC services):
- Connected Cars: for traffic safety and controls
- Connected Vessels: for logistics, tracking and fleet management;
- Remote Health Care;
- Remote Manufacturing;
- Remote surgery.

Network slicing has emerged as a major new networking paradigm for meeting the diverse requirements of various vertical businesses in virtual and cloud-native 5G networks. A network slice is a dynamically-created logical end-to-end network with an optimized topology to serve a specific use case, a service class or a customer.

A mobile network operator will be able to slice the network resources (routers and links) along with compute and storage resources (for running NFVs and cloud apps) and allocate them to a service. Though the technology is being spearheaded by the cellular telecommunications-focused 3rd Generation Partnership Project (3GPP), network slicing is likely to find application in fixed networks as well.

Two appealing features of network slicing are orchestration and isolated performance guarantees. An orchestrator can slice a network, along with compute and storage resources, and run a service in that slice. Isolated performance guarantees ensure one slice cannot interfere with the performance of another slice. One slice of the network may provide mission-critical services (such as emergency response), another slice might serve traditional cellular users, a third slice might be allocated for Internet of Things devices, and perhaps a fourth slice might be for an MVNO (Mobile Virtual Network Operator) customer, and so on.

Network slicing is a form of virtual network architecture using Software Defined Network (SDN) and Network Functions Virtualization (NFV) technologies for leveraging network functions and services in the slices, as described in ETSI GR NFV-EVE 012 V3.1.1 (2017-12). SDN and NFV are now being commercially deployed to deliver greater network flexibility by allowing traditional network architectures to be partitioned into virtual elements that can be linked (also through software). Network slicing allows multiple virtual networks to be created on top of a common shared physical infrastructure.

One of the key requirements of the 5G networks will be to support a variety of vertical industries such as smart grids, e-health and smart cities. These verticals derive different use cases, which impose very strict requirements than today services do. It is well understood that these requirements can be satisfied after significant improvements in the architecture are done. Network slicing can meet the diverse requirement for verticals and thus it is a key concept in the coming 5G Network.

An end-to-end (E2E) service might comprise different domains, each one having different technologies. The E2E slice will consist of sub-slices that belong to one or more domains. The slice is an instance that will implement and run the services requested by the verticals independently of each other with a distinct set of resources. Therefore, slicing is an enabler to support the verticals on a single infrastructure while maintaining and satisfying the QoS guarantees and SLA agreements with the verticals.

While 5G is increasingly spreading around the world, concerns about the security of the 5G network and the data transport are growing at the same pace. The problem of protection against attack enabled by quantum technologies is applicable also to multi-operator and/or multi-domain slices, as discussed in ETSI White Paper No. 27, "Implementation Security of Quantum Cryptography", First Edition, July 2018. On the other hand, security comes at a cost that is not necessary for all networks. In 3GPP TR 33.899 V1.3.0 it has been stated that "the 3GPP System shall have the capability to conform to service-specific security assurance requirements in each single network slice, rather than the whole network, which means every slice can have service-specific security mechanisms (including e.g. policy, protocols and functions and so on) configured" (section 5.8.3.2.1).

### Summary

It is an object to enable improved resilience against attack by classical and quantum computers for encrypted communications within a cellular network.

A first aspect provides a method for operating a network slice management function configured to manage a network slice of a cellular network. The method comprises receiving a request for a network slice. The request includes a specified end-to-end slice quantum protection level, QPL, for the network slice. Then, requesting, from a security management entity of the cellular network, allocation of network components having component QPLs at least equal to the specified slice QPL. A component QPL is indicative of a level of security, against an attack operated by a quantum computer, provided to the network component by quantum-resistant technology when the network component is using the quantum-resistant technology. The method further comprises receiving, from the security management entity, information identifying allocated network components and instantiating the network slice using network components of the allocated network components.

The method advantageously requires that an entire network slice is instantiated using network components able to operate using quantum-resistant technology. The method may enable end-to-end quantum-resistant security covering the whole network, from user equipment, UEs, and Internet of Things, IoT, devices to national backbones, FrontHaul, Access Aggregation and Metro-Regional Aggregation segments. The method may enable all data to be transmitted over quantum-resistant technology-protected links.

In an embodiment, the method further comprises receiving, from the security management entity, information indicative of component QPLs of the allocated network components. Further, determining a slice QPL of the network slice based on a lowest component QPL of the network components of the instantiated network slice.

In an embodiment, the method further comprises, in response to receiving the request for a network slice, searching existing network slices for a network slice having a slice QPL at least equal to the specified slice QPL. Further, in response to the searching finding a network slice having a slice QPL at least equal to the specified slice QPL, assigning said network slice in response to said request for a network slice. Further, in response to not finding a network slice having a slice QPL at least equal to the specified slice QPL, proceeding to said requesting, from a security management entity of the cellular network, allocation of network components to instantiate the requested network slice.

In an embodiment, the request for a network slice is one of a registration request message including a slice differentiator containing the specified slice QPL and a subscribed network slice selection assistance information, N-NSSAI, message including a slice differentiator containing the specified slice QPL.

In an embodiment, the method further comprises, following instantiation of the network slice, periodically determining a current slice QPL of the network slice and performing one of the following depending on the current slice QPL: no action required; perform active monitoring of the network slice and start actions to update network slice components when the current slice QPL is below a threshold slice QPL value; inform a Service Provider requesting the network slice that the current network slice QPL is less than the specified slice QPL; and stop operation of the network slice and move a Service using the network slice to another slice having a slice QPL at least equal to the specified slice QPL.

In an embodiment, periodically determining a current slice QPL of the network slice comprises periodically receiving current component QPLs of network components of the network slice and determining the current slice QPL of the network slice based on a lowest component QPL of the received current component QPLs.

In an embodiment, the current component QPLs are received from at least one of network components of the network slice and the security management entity.

Corresponding embodiments and advantages also apply to the communication network device hosting a network slice management function configured to manage a network slice of a cellular network described below.

A second aspect provides a method for operating a security management entity configured to orchestrate network slices in a cellular network wherein the network slices are generated from network components. The method comprises determining component quantum protection levels, QPLs, of network components. A component QPL is indicative of a level of security, against an attack operated by a quantum computer, provided to the network component by quantum-resistant technology when the network component is using the quantum-resistant technology. Further, receiving, from a network slice management function of the cellular network, a request for allocation of network components having component QPLs at least equal to a specified slice QPL. Further, allocating from available network components network components having component QPLs at least equal to the specified slice QPL. Further, sending, to the network slice management function, information identifying the allocated network components.

The method advantageously requires that an entire network slice is instantiated using network components able to operate using quantum-resistant technology. The method may enable end-to-end quantum-resistant security covering the whole network, from user equipment, UEs, and Internet of Things, IoT, devices to national backbones, FrontHaul, Access Aggregation and Metro-Regional Aggregation segments. The method may enable all data to be transmitted over quantum-resistant technology-protected links.

In an embodiment, the method further comprises, subsequent to said sending, periodically determining current component QPLs of network components and sending the current component QPLs to the network slice management function.

In an embodiment, periodically determining current component QPLs is performed with a periodicity that depends inversely on the specified slice QPL.

In an embodiment, the method further comprises adding QPLs of network components to deployment templates of network components.

Corresponding embodiments and advantages also apply to the communication network device hosting a security management entity configured to orchestrate network slices in a cellular network described below.

A third aspect provides a method for operating a network component of a cellular network. The method comprises determining a component quantum protection level, QPL, of the network component. The component QPL is indicative of a level of security, against an attack operated by a quantum computer, provided to the network component by quantum-resistant technology when the network component is using the quantum-resistant technology. Further, sending the component QPL to a network slice management function of the cellular network.

The method advantageously requires that an entire network slice is instantiated using network components able to operate using quantum-resistant technology. The method may enable end-to-end quantum-resistant security covering the whole network, from user equipment, UEs, and Internet of Things, IoT, devices to national backbones, FrontHaul, Access Aggregation and Metro-Regional Aggregation segments. The method may enable all data to be transmitted over quantum-resistant technology-protected links.

In an embodiment, a component QPL of a network component comprises a QPL value indicative of at least one type of quantum-resistant technology that the network component uses and an implementation approach of the at least one type of quantum-resistant technology.

In an embodiment, the level of security depends on at least one implementation characteristic of the quantum-resistant technology and said determining comprises mapping a network component to a QPL value depending on the quantum-resistant technology that the network component uses and the at least one implementation characteristic of the quantum-resistant technology.

In an embodiment, the at least one type of quantum-resistant technology comprises at least one of quantum key distribution, QKD, a quantum random number generator, QRNG, or post-quantum cryptography, PQC.

Use of QKD may enable end-to-end quantum-based security covering the entire network slice. QRNG may be exploited for high entropy key generation in all cases where QKD cannot be used. PQC will allow communication to use the latest available protocols that can protect from quantum-computer enabled attacks.

Corresponding embodiments and advantages also apply to the communication network device hosting a network component described below.

A fourth aspect provides a communication network device hosting a network slice management function configured to manage a network slice of a cellular network. The communication network device comprises interface circuitry, at least one processor and memory comprising instructions executable by the at least one processor whereby the network slice management function is operative as follows. To receive a request for a network slice, the request including a specified end-to-end slice quantum protection level, QPL, for the network slice. To request, from a security management entity of the cellular network, allocation of network components having component QPLs at least equal to the specified slice QPL. A component QPL is indicative of a level of security against an attack operated by a quantum computer, provided to the network component by quantum-resistant technology when the network component is using the quantum-resistant technology. To receive, from the security management entity, information identifying allocated network components. To instantiate the network slice using network components of the allocated network components.

A fifth aspect provides communication network device hosting a security management entity configured to orchestrate network slices in a cellular network wherein the network slices are generated from available network components. The communication network device comprises interface circuitry, at least one processor and memory comprising instructions executable by the at least one processor whereby the security management is operative as follows. To determine component quantum protection levels, QPLs, of network components. A component QPL is indicative of a level of security against an attack operated by a quantum computer, provided to the network component by quantum-resistant technology when the network component is using the quantum-resistant technology. To receive, from a network slice management function of the cellular network, a request for allocation of network components having component QPLs at least equal to a specified slice QPL. To allocate from available network components network components having component QPLs at least equal to the specified slice QPL. To send, to the network slice management function, information identifying the allocated network components.

A sixth aspect provides a communication network device hosting a network component, the communication network device comprising interface circuitry, at least one processor and memory comprising instructions executable by the at least one processor whereby the network component is operative as follows. To determine a component quantum protection level, QPL, of the network component. The component QPL is indicative of a level of security against an attack operated by a quantum computer, provided to the network component by quantum-resistant technology when the network component is using the quantum-resistant technology. To send the component QPL to a network slice management function of the cellular network.

A seventh aspect provides a system comprising a communication network device hosting a network slice management function configured to manage a network slice of a cellular network as detailed above and a communication network device hosting a security management entity as detailed above.

In an embodiment, the system further comprising at least one communication device hosting a network component as detailed above.

An eighth aspect provides a computer program comprising instructions which when executed on at least one processor cause the at least one processor to carry out steps of the above method for operating a network slice management function configured to manage a network slice of a cellular network.

A ninth aspect provides a computer program comprising instructions which when executed on at least one processor cause the at least one processor to carry out steps of the above method for operating a security management entity configured to orchestrate network slices in a cellular network.

A tenth aspect provides a computer program comprising instructions which when executed on at least one processor cause the at least one processor to carry out steps of the above method for operating a network component of a cellular network.

An eleventh aspect provides a carrier comprising a computer program as described above, wherein the carrier is one of a radio signal, electronic signal, optical signal and computer readable storage medium.

Embodiments of the invention will now be described, by way of example only, with reference to the accompanying drawings.

### Brief Description of the Drawings

Figures 1 to 5 are flowcharts illustrating embodiments of method steps;
Figure 6 is a block diagram illustrating an embodiment of a communication network device hosting a network slice management function;
Figure 7 is a block diagram illustrating an embodiment of a communication network device hosting a security management entity;
Figure 8 is a block diagram illustrating an embodiment of a communication network device hosting a network component;
Figure 9 is a block diagram illustrating an embodiment of a system comprising communication network devices; and
Figures 10 and 11 are signalling diagrams illustrating exchange of signals in an embodiment of a system comprising communication network devices.

### Detailed Description

The same reference numbers are used for corresponding features in different embodiments.

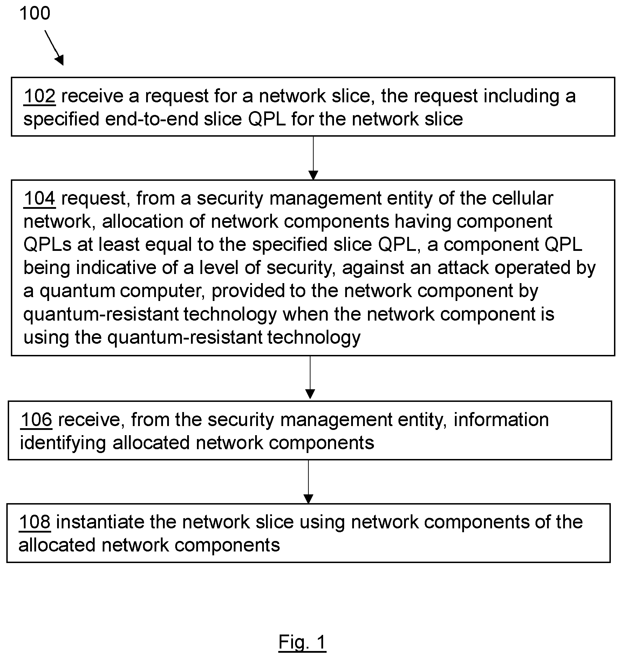

Referring to Figure 1, an embodiment provides a method 100 for operating a network slice management function configured to manage a network slice of a cellular network.

The method comprises:
- receiving 102 a request for a network slice, the request including a specified end-to-end slice quantum protection level, QPL, for the network slice;
- requesting 104, from a security management entity of the cellular network, allocation of network components having component QPLs at least equal to the specified slice QPL;
- receiving 106, from the security management entity, information identifying allocated network components; and
- instantiating 108 the network slice using network components of the allocated network components.

A network component (also known as a network node) may be a physical node (physical network function, PNF) a virtualized node (virtualized network function, VNF) or a cloud-native service (cloud-native network function, CNF) in a 5G network.

A component QPL is indicative of a level of security, against an attack operated by a quantum computer, provided to the network component by quantum-resistant technology when the network component is using the quantum-resistant technology.

Quantum-resistant technology is technology that is resistant to an attack operated by means of a quantum computer.

A quantum-resistant technology has a security level dependent on its implementation approach, and may be dependent on the underlying hardware and/or software used to implement the quantum-resistant technology.

For each type of quantum-resistant technology, e.g., QRNG, PQC, QKD, there are a number of different implementation approaches. For example, QKD may have an implementation approach of discrete-variable QKD, DV-QKD, continuous-variable QKD, CV-QKD, measurement-device-independent QKD, MDI-QKD, or twin-field QKD, TF-QKD. Each implementation approach may have one or more variants depending on characteristics of the implementation approach such as key rate, bit rate, adherence to standard certifications, sequence length (QRNG) and entropy level (QRNG). Each implementation approach/variant of each type of quantum-resistant technology may be implemented by different underlying hardware and/or software.

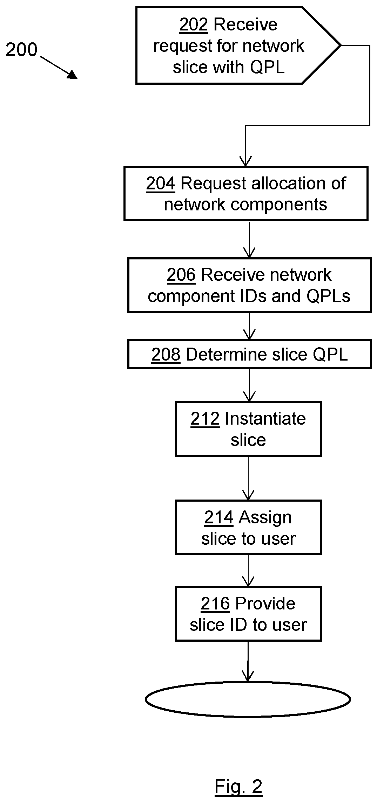

Referring to Figure 2, an embodiment provides a method 200 for operating a network slice management function configured to manage a network slice of a cellular network.

The method comprises:
- receiving 202 a request for a network slice from a user, the request including a specified end-to-end slice quantum protection level, QPL, for the network slice;
- requesting 204, from a security management entity of the cellular network, allocation of network components having component QPLs at least equal to the specified slice QPL;
- receiving 206, from the security management entity, network component IDs and QPLs of allocated network components;
- determining 208 a slice QPL of the network slice based on a lowest component QPL of the network components of the network slice to be instantiated;
- instantiating 212 the network slice using network components of the allocated network components;
- assigning 214 the instantiated network slice to the user; and
- providing 216 a slice ID of the instantiated network slice to the user.

In an embodiment, the request for a network slice is a registration request message including a slice differentiator containing the specified slice QPL, or a subscribed network slice selection assistance information, N-NSSAI, message including a slice differentiator containing the specified slice QPL.

As described at clause 5.15.2.1 of 3GPP TS 23.501 V16.4.0 (2020-03), a Single - Network Slice Selection Assistance Information, S-NSSAI, identifies a Network Slice. An S-NSSAI is comprised of:
- A Slice/Service type (SST), which refers to the expected Network Slice behaviour in terms of features and services; (Standard SST values: eMBB, URLLC, MloT, V2X)
- A Slice Differentiator (SD), which is optional information that complements the Slice/Service type(s) to differentiate amongst multiple Network Slices of the same Slice/Service type.

An S-NSSAI can have standard values (i.e. such S-NSSAI is only comprised of an SST with a standardized SST value, see clause 5.15.2.23GPP TS 23.501 V16.4.0 (2020-03), and no SD) or non-standard values (i.e. such S-NSSAI is comprised of either both an SST and an SD or only an SST without a standardized SST value and no SD). An S-NSSAI with a non-standard value identifies a single Network Slice within the public land mobile network, PLMN, with which it is associated. An S-NSSAI with a non-standard value shall not be used by the user equipment, UE, in access stratum procedures in any PLMN other than the one to which the S-NSSAI is associated.

The slice QPL may be configured explicitly to the UE and sent in a Registration Request message to the network using an existing parameter (such as an S-NSSAI in the Requested NSSAI where the SST is URLLC; the slice QPL can be decided based on the SD part). Alternatively, or additionally, the slice QPL could be encoded in the SD or in the nsilnformationList reported by the Network Slice Selection Service instance contacted by the access and mobility management function, AMF, that has received the request from the UE.

Instantiating the network slice using network components of the allocated network components may be performed using GSMA - NG.116 Generic Network Slice Template version 2.0 (16.10.2019) having an additional attribute "Slice QS" added to specify the slice QPL, as illustrated below (see Table 1 and Table 2):

**Table 1**

| **Parameters** | |
|---|---|
| Value type | {Integer} |
| Value range | Range [0-100] |
| Example | **QPL** {80} |
| Tag | Character parameter, Function related |

**Table 2**

| **Attribute Presence** | |
|---|---|
| Mandatory | |
| Conditional | |
| Optional | X |

The possible value of the additional attribute "Slice QS" is an integer QPL value. In this example, 100 is considered the highest QPL, while 0 is the lowest one. Lower QPLs may also indicate a slower reaction to any new discovered vulnerability.

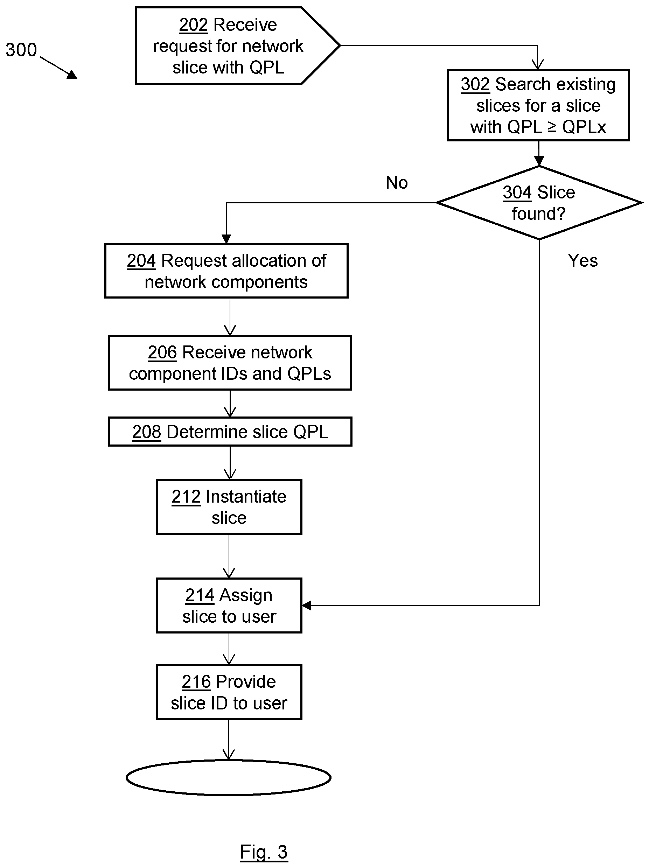

In an embodiment, illustrated in Figure 3, the method 300 further comprises, in response to receiving the request for a network slice, searching 302 existing network slices for a network slice having a slice QPL at least equal to the specified slice QPL. In response to the searching finding 304 a network slice having a slice QPL at least equal to the specified slice QPL, said network slice is assigned 214 to the user in response to the request for a network slice. In response to not finding a network slice having a slice QPL at least equal to the specified slice QPL, the method proceeds as described above with reference to Figure 2, by requesting 204, from a security management entity of the cellular network, allocation of network components to instantiate the requested network slice.

In an embodiment, the method 100, 200, 300 further comprises, following instantiation of the network slice, periodically determining a current slice QPL of the network slice. Depending on the current slice QPL, one of the following are performed:
- no action required;
- perform active monitoring of the network slice and start actions to update network slice components;
- inform a Service Provider requesting the network slice that the current network slice QPL is less than the specified slice QPL; and
- stop operation of the network slice and move a Service using the network slice to another slice having a slice QPL at least equal to the specified slice QPL.

The slice QPL may become unavailable because the specified QPL is not available in a part of the network, i.e., at one or more network components. This might lead to a reduced protection level and therefore a slice with the specified QPL not being available. Users and applications of a network slice with a slice QPL that has reduced below the specified slice QPL may be made aware that the slice is no longer available. Users and applications that are going to request a slice with a certain QPL will receive the information that such a QPL is not available, thus getting the possibility to decide to stop some operations that are sensitive and require a specified QPL.

Slice QPL unavailability may occur for a number of reasons, including for example: sudden unavailability/malfunction of a node, a severe security weakness detected in a node's SW component, an end-user of the slice who is in motion and, as such, could be routed via another node not belonging to the original slice, which doesn't have a proper QPL.

If the current slice QPL has reduced, the network provider may increase a level of monitoring or decide to add specific security controls to mitigate the situation. A network provider may define a service level agreement, SLA, for the slice QPL and ensure that an instantiated slice complies with the SLA.

According to the level of degradation of the slice QPL, some specific actions need to be started to achieve an agreed service level. For example:

| **Slice QPL** | **Action** |
|---|---|
| 80-100 | None |
| 79-70 | Perform active monitoring and start actions to update slice components |
| 69-60 | Inform the Slice Provider with an alarm of severity warning of degraded protection |
| 59-40 | Inform the Slice Provider of the increased severity of the alarm to major which needs immediate action |
| 39-0 | Stop the slice and move the Service immediately to another slice with specified QPL. |

No action is required if the slice QPL is at least equal to a threshold slice QPL value, in this example 80. When the slice QPL is below the threshold slice QPL value in a first range, in this example 70-79, performing active monitoring starts and actions to update slice components start. When the slice QPL is below the threshold slice QPL value in a second, lower range, in this example 60-69, an alarm is generated to inform the slice provider of a severity warning of degraded protection. When the slice QPL is below the threshold slice QPL value in a third, lover range, in this example 40-59, the slice provider is informed of the increased severity of the alarm to major, which needs immediate action. When the slice QPL is below the threshold slice QPL value in a fourth, lower, range, in this example 0-39, slice operation is stopped and a service using the slice is immediately moved to another slice having the specified QPL. If the slice QPL is subsequently restored (e.g. >80), the actions may be immediately stopped and the normal slice activity resumed, according to the requested slice SLA. Monitoring tools such as SIEM, IDS, and others, may be used to increase the slice QS; the tool security level can be set according to the decreased QS. Slice users may indicate in the SLA the low QPL thresholds for which they wish to be advised and also the possible actions to be consequently triggered: matrix of security levels and actions.

In an embodiment, a current slice QPL of the network slice is periodically determined, as follows. Current component QPLs of network components of the network slice are periodically received by the network slice management function. The current slice QPL of the network slice is then determined based on a lowest component QPL of the received current component QPLs.

In general, the slice QPL should be updated if there is a change which causes the component QPL of a network component of the network slice to go below the specified QPL.

In an embodiment, the current component QPLs are received from network components of the network slice and/or from the security management entity.

Corresponding embodiments also apply to the communication network device 600 hosting a network slice management function described below.

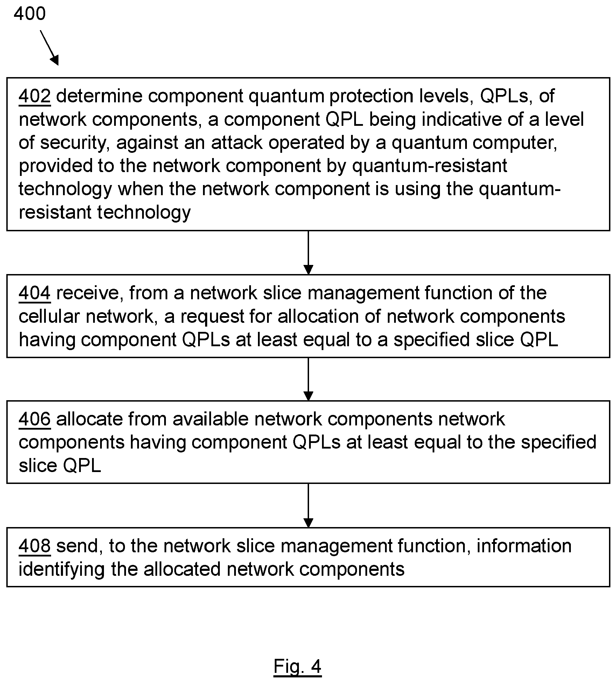

Referring to Figure 4, an embodiment provides a method 400 for operating a security management entity configured to orchestrate network slices in a cellular network. The network slices are generated from network components.

The method comprises:
- determining 402 component quantum protection levels, QPLs, of network components;
- receiving 404, from a network slice management function of the cellular network, a request for allocation of network components having component QPLs at least equal to a specified slice QPL;
- allocating 406 from available network components network components having component QPLs at least equal to the specified slice QPL; and
- sending 408, to the network slice management function, information identifying the allocated network components.

A network component (also known as a network node) may be a physical node (physical network function, PNF) a virtualized node (virtualized network function, VNF) or a cloud-native service (cloud-native network function, CNF) in a 5G network.

A component QPL is indicative of a level of security, against an attack operated by a quantum computer, provided to the network component by quantum-resistant technology when the network component is using the quantum-resistant technology.

Quantum-resistant technology is technology that is resistant to an attack operated by means of a quantum computer. A quantum-resistant technology has a security level dependent on its implementation approach, and may be dependent on the underlying hardware and/or software used to implement the quantum-resistant technology.

For each type of quantum-resistant technology, e.g. QRNG, PQC, QKD, there are a number of different implementation approaches. For example, QKD may have an implementation approach of discrete-variable QKD, DV-QKD, continuous-variable QKD, CV-QKD, measurement-device-independent QKD, MDI-QKD, or twin-field QKD, TF-QKD. Each implementation approach may have one or more variants depending on characteristics of the implementation approach such as key rate, bit rate, adherence to standard certifications, sequence length (QRNG) and entropy level (QRNG). Each implementation approach/variant of each type of quantum-resistant technology may be implemented by different underlying hardware and/or software.

In an embodiment, the method 400 further comprises, subsequent to sending the information identifying the allocated network components to the network slice management function, periodically determining current component QPLs of network components. The current component QPLs are sent to the network slice management function.

In an embodiment, periodically determining current component QPLs is performed with a periodicity that depends inversely on the specified slice QPL. The current component QPLs will therefore be determined more often for a network slice having a relatively high specified slice QPL as compared to one having a relatively low specified slice QPL.

In an embodiment, the method 400 further comprises adding QPLs of network components to deployment templates of network components.

For example, a new attribute may be added to a virtualized network function, VNF, descriptor, VNFD, information element table 7.1.2.2-1 in ETSI GS NFV-IFA 011 V3.3.1 (2019-09): Network Functions Virtualisation (NFV) Release 3; Management and Orchestration; VNF Descriptor and Packaging Specification.

A VNFD is a deployment template which describes a VNF in terms of deployment and operational behaviour requirements. It also contains connectivity, interface and virtualised resource requirements. The attributes of the VNFD information element shall follow the indications provided in table 7.1.2.2-1: Attributes of the Vnfd information element. A new attribute, QPL, may be added to table 7.1.2.2-1 as follows:

| Attribute | Qualifier | Cardinality | Content | Description |
|---|---|---|---|---|
| QPL | M | 1 | integer | Indicate the QPL of the VNF related to the applied quantum-resistant technology |

Section 7.3.1 of 3GPP TR 28.801 V15.1.0 (2018-01) may also be amended to introduce slice QPL in the set of attributes to specify different options and other service requirements.

The embodiments below apply equally to the method 400 and to the method 500 described below.

In an embodiment, a component QPL of a network component comprises a QPL value indicative of at least one type of quantum-resistant technology that the network component uses and an implementation approach of the at least one type of quantum-resistant technology.

In an embodiment, the at least one type of quantum-resistant technology comprises at least one of quantum key distribution, QKD, a quantum random number generator, QRNG, or post-quantum cryptography, PQC.

A QRNG generates random numbers using a high entropy source, enabling high entropy key generation, as described for example in Lin, X., Wang, S., Yin, ZQ. et al. "Security analysis and improvement of source independent quantum random number generators with imperfect devices", npj Quantum Information vol 6, 100 (2020). QKD, detailed for example in, ETSI GR QKD 003 V2.1.1 (2018-03), implements unconditionally secure key exchange, thus enabling the use of cryptographic algorithms based on symmetric keys, which are simpler, quantum secure and less expensive than cryptographic algorithms based on asymmetric keys. QKD also enables continuous generation of keys, thus not requiring, in principle, key storage and relay infrastructures. PQC bridges the gap between currently used asymmetric key encryption algorithms and QKD, as described for example at https://csrc.nist.gov/projects/post-quantum-cryptography/post-quantum-cryptography-standardization/evaluation-criteria/security-(evaluation-criteria).

QRNGs and QKD are quantum technologies but not fully-fledged security solutions, they are used to strengthen specific parts of legacy security solutions, which they still require in order to work. PQC is a complete security solution; it is not a quantum technology, but it is a quantum-resistant technology, i.e. a classical security solution resistant to known attacks deliverable via a quantum computer. PQC is made stronger and more effective if one uses a QRNG together with it, for high entropy key generation.

Table 3 below gives examples of potential QPL value ranges in increasing order to be assigned to network components according to the type or mix ("Class") of quantum-resistant technology implemented at each network component:

**Table 3: Classes of quantum-resistant technology, cardinality and QPL ranges**

| CLASS of quantum-resistant technology | CARDINALITY | QPL_MIN | QPL_MAX |
|---|---|---|---|
| a=QRNG | 3 | 1 | QPL_Minₐ + Cardinalityₐ |
| b=PQC | 4 | QPL_Maxₐ +1 | QPL_Min_{b} + Cardinality_{b} |
| c=QRNG_PQC | 7 | QPL_Max_{b} +1 | QPL_Min_{c} + Cardinality_{c} |
| d=QKD | 2 | QPL_Max_{c} +1 | QPL_Min_{d} + Cardinality_{d} |

For each type of quantum-resistant technology, i.e. QRNG, PQC, QKD, there are a number of different implementation approaches. For example, QKD may be implemented as discrete-variable QKD, DV-QKD, continuous -variable QKD, CV-QKD, measurement-device-independent QKD, MDI-QKD, or twin-field QKD, TF-QKD. Each implementation approach may have one or more variants depending on implementation characteristics such as key rate, bit rate, adherence to standard certifications, sequence length (QRNG) and entropy level (QRNG). Each class of quantum-resistant technology is associated with a different type or mix of quantum-resistant technology. Cardinality is the number of different implementation approaches/variants currently available in the market.

The QPL ranges (QPL_MIN to QPL_MAX) in table 3 are set based on the type and mix of quantum-resistant technology in each class. There is of course a dependency in some cases on whether the underlying hardware and/or software is available to a network component, in particular specialized hardware such as is required for QRNG and QKD.

Table 4 below gives examples of quantum-resistant technology implementation approaches and their associated QPLs, for each of the classes in Table 3. Comments on some of the approaches are also provided.

**Table 4: Quantum-resistant technology approaches and associated QPLs**

| Quantum-resistant technology approach | QPL | Comment |
|---|---|---|
| (Source Dependent) QRNG | 1 | QRNGs based on very diverse physical principles and algorithms. |
| (Source-Independent) SI-QRNG | 2 | QRNGs which can be certified and reach a medium-high bit rate, but have potential security holes in their practical implementations |
| (Device-Independent) DI-QRNG | 3 | QRNGs which can be certified and are based on Bell Tests, so more secure than others, though reaching low bit-rates. |
| Isogeny-based PQC | 4 | Short keys, so more suitable for commercial use, but with relatively lower security |
| Code-based PQC | 5 | Extremely long keys. Practical implementations with shorter keys lead to a drop in security |
| Lattice-based PQC | 6 | Allegedly harder to break, but using relatively long keys |
| Isogeny-based PQC + (Source Dependent) QRNG | 7 | |
| Isogeny-based PQC + (Source-Independent) SI-QRNG | 8 | |
| Isogeny-based PQC + (Device-Independent) DI-QRNG | 9 | |
| Code-based PQC + (Source Dependent) QRNG | 10 | |
| Code-based PQC + (Source-Independent) SI-QRNG | 11 | |
| Code-based PQC + (Device-Independent) DI-QRNG | 12 | |
| Lattice-based PQC + (Source Dependent) QRNG | 13 | |
| Lattice-based PQC + (Source-Independent) SI-QRNG | 14 | |
| Lattice-based PQC + (Device-Independent) DI-QRNG | 15 | |
| (Continuous Variable) CV-QKD | 16 | Higher key rate, but harder to fine-tune and prone to leakage and loopholes. < 100Km distance reach without repeaters. |
| (Discrete Variable) DV-QKD | 17 | Low key rate, but relatively more secure than CV-QKD. <200Km distance reach without repeaters. |
| (Measurement Device Independent) MDI-QKD | 18 | High security, medium key rate, high distance reach without repeaters. |
| (Twin Field) TF-QKD | 19 | High security, high key rate, high distance reach without repeaters (latest news are about a TF-QKD implementation reaching a distance of 830Km) |

As the skilled person will appreciate, in practice, Table 4 would constantly be updated to reflect the progress being made in the various technologies. Table 4 may be expanded to include implementation variants, specific commercial products and further mixes of technologies. For instance, considering QKD, for each of the QKD approaches in Table 4, variants may be included indicating the cryptographic algorithm used in conjunction with the keys to protect the QKD link and types of authentication protocols, such as classical asymmetric key exchange, for example elliptic curve Diffie-Hellman (ECDH) or a PQC-based Key Exchange Mechanism (KEM).

As the skilled person will know, for the QKD approaches included in Table 4, repeaters are still the weakest link of the security chain and should be avoided. Future Quantum Repeaters based on entanglement are expected to close current security loopholes and enable the quantum internet.

Corresponding embodiments also apply to the communication network device 700 hosting a security management entity described below.

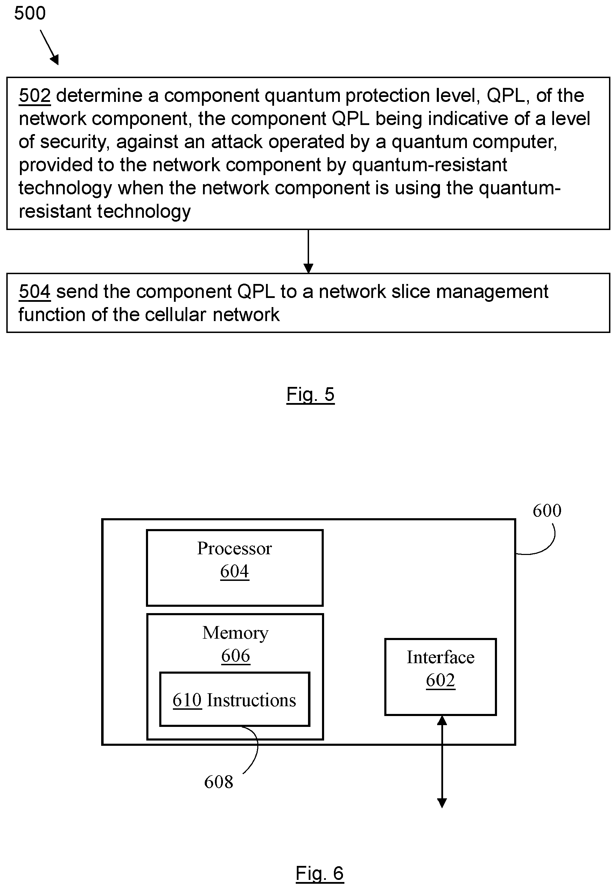

Referring to Figure 5, an embodiment provides a method 500 for operating a network component of a cellular network.

The method comprises:
- determining 502 a component quantum protection level, QPL, of the network component; and
- sending 504 the component QPL to a network slice management function of the cellular network.

The component QPL is indicative of a level of security, against an attack operated by a quantum computer, provided to the network component by quantum-resistant technology when operating the network component is using the quantum-resistant technology.

Corresponding embodiments also apply to the communication network device 750 hosting a network component described below.

Referring to Figure 6, an embodiment provides a communication network device 600 hosting a network slice management function configured to manage a network slice of a cellular network. The communication network device comprising interface circuitry 602, a processor 604 and memory 606. The memory comprising instructions 610 executable by the processor whereby the network slice management function is operative to receive a request for a network slice. The request includes a specified end-to-end slice QPL for the network slice. The network slice management function is further operative to request, from a security management entity of the cellular network, allocation of network components having component QPLs at least equal to the specified slice QPL. The network slice management function is further operative to receive, from the security management entity, information identifying allocated network components and instantiate the network slice using network components of the allocated network components.

As described above, a component QPL is indicative of a level of security against an attack operated by a quantum computer, provided to the network component by quantum-resistant technology that the network component has when operating the network component is using the quantum-resistant technology.

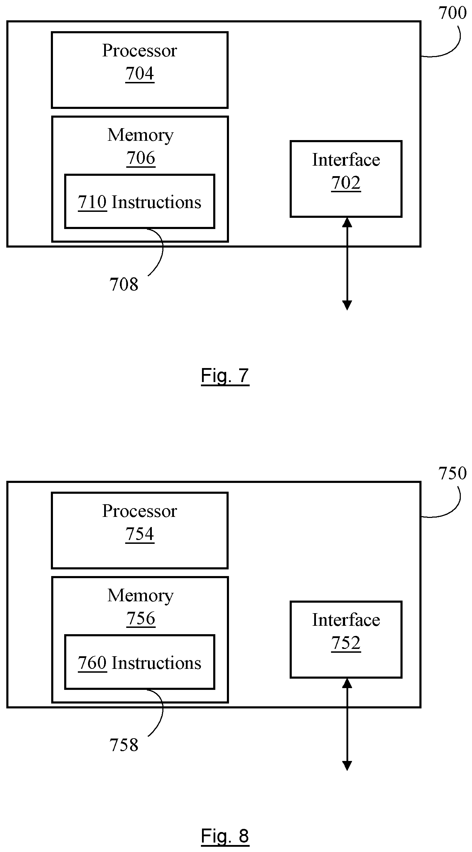

Referring to Figure 7, an embodiment provides a communication network device 700 hosting a security management entity configured to orchestrate network slices in a cellular network. The network slices are generated from available network components. The communication network device comprises interface circuitry 702, a processor 704 and memory 706. The memory comprises instructions 710 executable by the processor whereby the security management entity is operative to determine component QPLs of network components. The security management entity is further operative to receive, from a network slice management function of the cellular network, a request for allocation of network components having component QPLs at least equal to a specified slice QPL. The security management entity is operative to then allocate, from available network components, network components having component QPLs at least equal to the specified slice QPL and to send, to the network slice management function, information identifying the allocated network components.

As described above, a component QPL is indicative of a level of security against an attack operated by a quantum computer, provided to the network component by quantum-resistant technology when the network component is using the quantum-resistant technology.

Referring to Figure 8, an embodiment provides a communication network device 750 hosting a network component. The communication network device comprises interface circuitry 752, a processor 754 and memory 756. The memory comprises instructions 760 executable by the processor whereby the network component is operative to determine a component QPL of the network component and send the component QPL to a network slice management function of the cellular network.

As described above, a component QPL is indicative of a level of security against an attack operated by a quantum computer, provided to the network component by quantum-resistant technology when the network component is using the quantum-resistant technology.

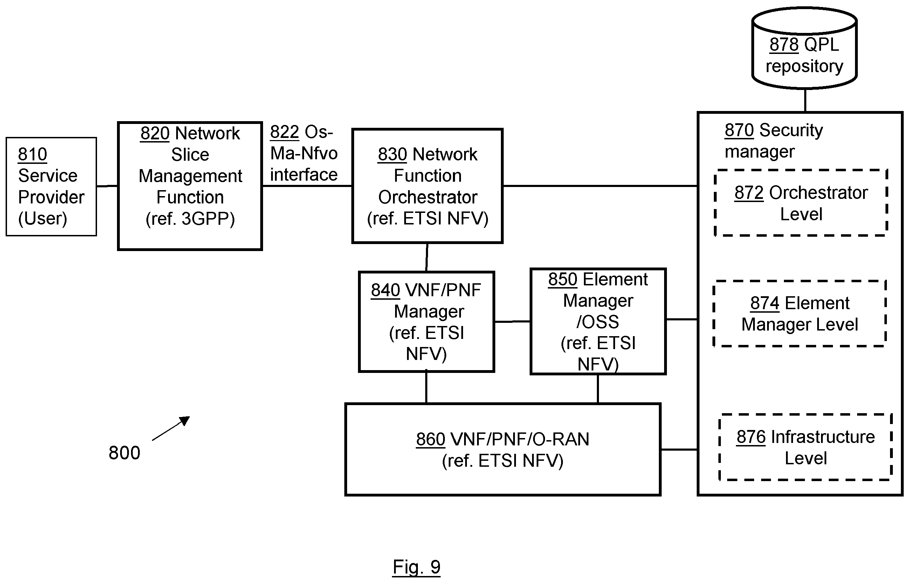

Referring to Figures 9 to 11, an embodiment provides a system 800 comprising a communication network device 600 hosting a network slice management function 820 and a communication network device 700 hosting a security management entity 872.

The system is provided within the network function virtualization, NFV, framework and uses the Os-Ma_Nfvo interface. The security management entity is an orchestrator level of a security manager 870. The NFV framework additionally comprises a Network Function Orchestrator, NFO, an element manager level 874 and an infrastructure level 876 within the security manager, a virtualized network function/physical network function, VNF/PNF, Manager, an Element Manager and VNF/PNF/Open radio access network, O-RAN, nodes.

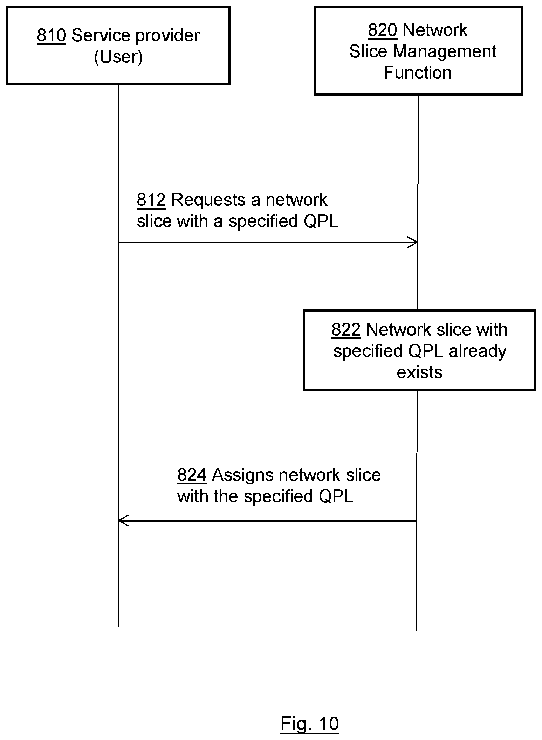

As illustrated in Figure 10, and referring back to Figure 3, network slice orchestration is performed by a service provider (user) 810 sending a request 812 for a network slice having a specified slice QPL to the network slice management function 820. The network slice management function checks whether a network slice with the specified QPL already exists. If a network slice with the specified slice QPL exists 822, the network slice management function assigns 824 a network slice with the specified slice QPL to the user.

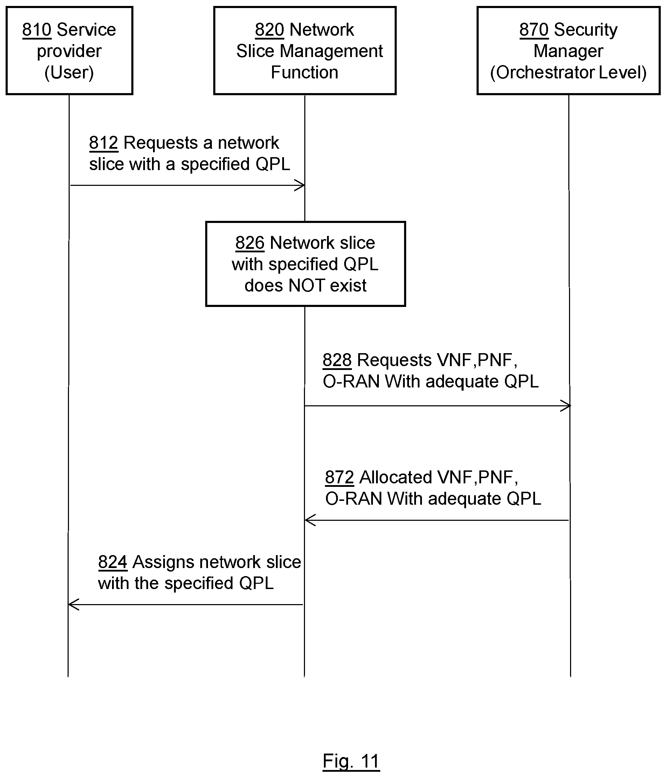

As illustrated in Figure 11, and referring back to Figure 3, if a network slice with the specified slice QPL does not exist 826, the network slice management function 820 sends a request to the security manager (orchestration level) 870 for allocation of network components (VNF, PNF, O-RAN) with component QPLs that are greater than or equal to the specified slice QPL. The security manager (orchestrator level) allocates, from available network components, VNF/PNF/O-RAN network components with component QPLs at least equal to the specified slice QPL and sends 872 information identifying the allocated network components and their QPLs to the network slice management function. The network slice management function instantiates the requested network slice using network components of the allocated network components and assigns 824 the instantiated network slice to the user 810.

As illustrated in Figure 6, an embodiment provides a computer program 608 comprising instructions which when executed on a processor 604 cause the processor to carry out steps of the method 100, 200, 300 for operating a network slice management function described above.

As illustrated in Figure 7, an embodiment provides a computer program 708 comprising instructions which when executed on a processor 704 cause the processor to carry out steps of the method 400 for operating a security management entity described above.

As illustrated in Figure 8, an embodiment provides a computer program 758 comprising instructions which when executed on a processor 754 cause the processor to carry out steps of the method 500 for operating a network component described above.

## Claims

1. A method (100, 200, 300) for operating a network slice management function configured to manage a network slice of a cellular network, the method performed by a communication network device hosting the network slice management function, the method comprising:
- receiving (102, 202) a request for a network slice, the request including a specified end-to-end slice quantum protection level, QPL, for the network slice;
- requesting (104, 204), from a security management entity of the cellular network, allocation of network components having component QPLs at least equal to the specified slice QPL, a component QPL being indicative of a level of security, against an attack operated by a quantum computer, provided to the network component by quantum-resistant technology when the network component is using the quantum-resistant technology;
- receiving (106, 206), from the security management entity, information identifying allocated network components;
- instantiating (108, 212) the network slice using network components of the allocated network components; and
- following instantiation of the network slice, periodically determining a current slice QPL of the network slice and performing one of the following depending on the current slice QPL:
- no action required;
- perform active monitoring of the network slice and start actions to update network slice components when the current slice QPL is below a threshold slice QPL value;
- inform a Service Provider requesting the network slice that the current network slice QPL is less than the specified slice QPL; and
- stop operation of the network slice and move a Service using the network slice to another slice having a slice QPL at least equal to the specified slice QPL.

2. The method of claim 1, further comprising:
- receiving (206), from the security management entity, information indicative of component QPLs of the allocated network components; and
- determining (208) a slice QPL of the network slice based on a lowest component QPL of the network components of the instantiated network slice.

3. The method of any one of claims 1 to 2, further comprising:
- in response to receiving the request for a network slice, searching (302) existing network slices for a network slice having a slice QPL at least equal to the specified slice QPL;
- in response to the searching finding (304) a network slice having a slice QPL at least equal to the specified slice QPL, assigning (214) said network slice in response to said request for a network slice; and
- in response to not finding a network slice having a slice QPL at least equal to the specified slice QPL, proceeding to said requesting (204), from a security management entity of the cellular network, allocation of network components to instantiate the requested network slice.

4. The method of any one of claims 1 to 3, wherein the request for a network slice is one of a registration request message including a slice differentiator containing the specified slice QPL and a subscribed network slice selection assistance information, N-NSSAI, message including a slice differentiator containing the specified slice QPL.

5. The method of any one of claims 1-4, wherein periodically determining a current slice QPL of the network slice comprises:
- periodically receiving current component QPLs of network components of the network slice; and
- determining the current slice QPL of the network slice based on a lowest component QPL of the received current component QPLs.

6. A method (400) for operating a security management entity configured to orchestrate network slices in a cellular network wherein the network slices are generated from network components, the method performed by a communication network device hosting the security management entity, the method comprising:
- determining (402) component quantum protection levels, QPLs, of network components, a component QPL being indicative of a level of security, against an attack operated by a quantum computer, provided to the network component by quantum-resistant technology when the network component is using the quantum-resistant technology;
- receiving (404), from a network slice management function of the cellular network, a request for allocation of network components having component QPLs at least equal to a specified slice QPL;
- allocating (406) from available network components network components having component QPLs at least equal to the specified slice QPL;
- sending (408), to the network slice management function, information identifying the allocated network components; and subsequent to said sending:
- periodically determining current component QPLs of network components; and
- sending the current component QPLs to the network slice management function.

7. The method of claim 6, wherein periodically determining current component QPLs is performed with a periodicity that depends inversely on the specified slice QPL.

8. The method of any one of claims 6 to 7, further comprising adding QPLs of network components to deployment templates of network components.

9. A method (500) for operating a network component of a cellular network, the method performed by a communication network device hosting the network component, the method comprising:
- determining (502) a component quantum protection level, QPL, of the network component, the component QPL being indicative of a level of security, against an attack operated by a quantum computer, provided to the network component by quantum-resistant technology when the network component is using the quantum-resistant technology; and
- sending (504) the component QPL to a network slice management function of the cellular network.

10. A communication network device (600) hosting a network slice management function configured to manage a network slice of a cellular network, the communication network device comprising interface circuitry (602), at least one processor (604) and memory (606) comprising instructions (610) executable by the at least one processor whereby the network slice management function is operative to:
- receive a request for a network slice, the request including a specified end-to-end slice quantum protection level, QPL, for the network slice;
- request, from a security management entity of the cellular network, allocation of network components having component QPLs at least equal to the specified slice QPL, a component QPL being indicative of a level of security against an attack operated by a quantum computer, provided to the network component by quantum-resistant technology when the network component is using the quantum-resistant technology;
- receive, from the security management entity, information identifying allocated network components;
- instantiate the network slice using network components of the allocated network components; and
- following instantiation of the network slice, periodically determine a current slice QPL of the network slice and performing one of the following depending on the current slice QPL:
- no action required;
- perform active monitoring of the network slice and start actions to update network slice components when the current slice QPL is below a threshold slice QPL value;
- inform a Service Provider requesting the network slice that the current network slice QPL is less than the specified slice QPL; and
- stop operation of the network slice and move a Service using the network slice to another slice having a slice QPL at least equal to the specified slice QPL.

11. A communication network device (700) hosting a security management entity configured to orchestrate network slices in a cellular network wherein the network slices are generated from available network components, the communication network device comprising interface circuitry (702), at least one processor (704) and memory (706) comprising instructions (710) executable by the at least one processor whereby the security management is operative to:
- determine component quantum protection levels, QPLs, of network components, a component QPL being indicative of a level of security against an attack operated by a quantum computer, provided to the network component by quantum-resistant technology when the network component is using the quantum-resistant technology;
- receive, from a network slice management function of the cellular network, a request for allocation of network components having component QPLs at least equal to a specified slice QPL;
- allocate from available network components network components having component QPLs at least equal to the specified slice QPL;
- send, to the network slice management function, information identifying the allocated network components; and subsequent to said sending:
- periodically determining current component QPLs of network components; and
- sending the current component QPLs to the network slice management function.

12. A communication network device (750) hosting a network component, the communication network device comprising interface circuitry (752), at least one processor (754) and memory (756) comprising instructions (760) executable by the at least one processor whereby the network component is operative to:
- determine a component quantum protection level, QPL, of the network component, the component QPL being indicative of a level of security against an attack operated by a quantum computer, provided to the network component by quantum-resistant technology when the network component is using the quantum-resistant technology;
- send the component QPL to a network slice management function of the cellular network; and subsequent to said sending:
- periodically determining current component QPLs of network components; and
- sending the current component QPLs to the network slice management function.

13. A computer program (608) comprising instructions (610) which when executed on at least one processor cause the at least one processor to carry out the method according to any one of claims 1 to 5.

14. A computer program (708) comprising instructions (710) which when executed on at least one processor cause the at least one processor to carry out the method according to any one of claims 6 to 8.

15. A computer program (758) comprising instructions (760) which when executed on at least one processor cause the at least one processor to carry out the method according to claim 9.

## Patentansprüche

1. Verfahren (100, 200, 300) zum Betreiben einer Netzwerk-Slice-Verwaltungsfunktion, die zum Verwalten eines Netzwerk-Slices eines zellularen Netzwerks konfiguriert ist, wobei das Verfahren von einer Kommunikationsnetzwerkvorrichtung durchgeführt wird, die die Netzwerk-Slice-Verwaltungsfunktion hostet, wobei das Verfahren Folgendes umfasst:
- Empfangen (102, 202) einer Anforderung für einen Netzwerk-Slice, wobei die Anforderung eine spezifizierte Ende-zu-Ende-Slice-Quantenschutzstufe, Ende-zu-Ende-Slice-QPL, für den Netzwerk-Slice umfasst;
- Anfordern (104, 204) einer Zuweisung von Netzwerkkomponenten mit Komponenten-QPLs, die zumindest gleich der spezifizierten Slice-QPL sind, von einer Sicherheitsverwaltungsentität des zellularen Netzwerks, wobei eine Komponenten-QPL eine Stufe von Schutz gegen einen von einem Quantencomputer ausgeführten Angriff angibt, die für die Netzwerkkomponente durch quantenresistente Technologie bereitgestellt wird, wenn die Netzwerkkomponente die quantenresistente Technologie verwendet;
- Empfangen (106, 206) von Informationen, die zugewiesene Netzwerkkomponenten identifizieren, von der Sicherheitsverwaltungsentität;
- Instanziieren (108, 212) des Netzwerk-Slices unter Verwendung von Netzwerkkomponenten der zugewiesenen Netzwerkkomponenten;
- nach der Instanziierung des Netzwerk-Slices periodisches Bestimmen einer aktuellen Slice-QPL des Netzwerk-Slices und Durchführen eines von Folgendem in Abhängigkeit von der aktuellen Slice-QPL:
- keine Aktion erforderlich;
- Durchführen aktiver Überwachung des Netzwerk-Slices und Starten von Aktionen zum Aktualisieren von Netzwerk-Slice-Komponenten, wenn die aktuelle Slice-QPL unter einem Slice-QPL-Schwellenwert liegt;
- Informieren eines Dienstanbieters, der den Netzwerk-Slice anfordert, dass die aktuelle Netzwerk-Slice-QPL niedriger als die spezifizierte Slice-QPL ist; und
- Stoppen des Betriebs des Netzwerk-Slices und Verschieben des Dienstes, der den Netzwerk-Slice verwendet, zu einem anderen Slice mit einer Slice-QPL, die zumindest gleich der spezifizierten Slice-QPL ist.

2. Verfahren nach Anspruch 1, ferner umfassend:
- Empfangen (206) von Informationen, die Komponenten-QPLs der zugewiesenen Netzwerkkomponenten angeben, von der Sicherheitsverwaltungsentität; und
- Bestimmen (208) einer Slice-QPL des Netzwerk-Slices basierend auf einer niedrigsten Komponenten-QPL der Netzwerkkomponenten des instanziierten Netzwerk-Slices.

3. Verfahren nach einem der Ansprüche 1 bis 2, ferner umfassend:
- in Reaktion auf das Empfangen der Anforderung für einen Netzwerk-Slice Suchen (302) nach bestehenden Netzwerk-Slices für einen Netzwerk-Slice mit einer Slice-QPL, die zumindest gleich der spezifizierten Slice-QPL ist;
- in Reaktion darauf, dass das Suchen einen Netzwerk-Slice mit einer Slice-QPL ermittelt (304), die zumindest gleich der spezifizierten Slice-QPL ist, Zuordnen (214) des Netzwerk-Slices in Reaktion auf die Anforderung für einen Netzwerk-Slice; und
- in Reaktion darauf, dass kein Netzwerk-Slice mit einer Slice-QPL ermittelt wird, die zumindest gleich der spezifizierten Slice-QPL ist, Fortfahren mit dem Anfordern (204) einer Zuweisung von Netzwerkkomponenten zur Instanziierung des angeforderten Netzwerk-Slices von einer Sicherheitsverwaltungsentität des zellularen Netzwerks.

4. Verfahren nach einem der Ansprüche 1 bis **3,** wobei die Anforderung für einen Netzwerk-Slice eine von einer Registrierungsanforderungsnachricht, die einen Slice-Differentiator umfasst, der die spezifizierte Slice-QPL enthält, und einer abonnierten Netzwerk-Slice-Auswahl-Unterstützungsinformationsnachricht, N-NSSAI-Nachricht, ist, die einen Slice-Differentiator umfasst, der die spezifizierte Slice-QPL enthält.

5. Verfahren nach einem der Ansprüche 1-4, wobei das periodische Bestimmen einer aktuellen Slice-QPL des Netzwerk-Slices Folgendes umfasst:
- periodisches Empfangen aktueller Komponenten-QPLs von Netzwerkkomponenten des Netzwerk-Slices; und
- Bestimmen der aktuellen Slice-QPL des Netzwerk-Slices basierend auf einer niedrigsten Komponenten-QPL der empfangenen aktuellen Komponenten-QPLs.

6. Verfahren (400) zum Betreiben einer Sicherheitsverwaltungsentität, die zum Orchestrieren von Netzwerk-Slices in einem zellularen Netzwerk konfiguriert ist, wobei die Netzwerk-Slices aus Netzwerkkomponenten erstellt werden, wobei das Verfahren von einer Kommunikationsnetzwerkvorrichtung durchgeführt, die die Sicherheitsverwaltungsentität hostet, wobei das Verfahren Folgendes umfasst:
- Bestimmen (402) von Komponenten-Quantenschutzstufen, Komponenten-QPLs, von Netzwerkkomponenten, wobei eine Komponenten-QPL eine Stufe von Schutz gegen einen von einem Quantencomputer ausgeführten Angriff angibt, die für die Netzwerkkomponente durch quantenresistente Technologie bereitgestellt wird, wenn die Netzwerkkomponente die quantenresistente Technologie verwendet;
- Empfangen (404) einer Anforderung zur Zuweisung von Netzwerkkomponenten mit Komponenten-QPLs, die zumindest gleich einer spezifizierten Slice-QPLs sind, von einer Netzwerk-Slice-Verwaltungsfunktion des zellularen Netzwerks;
- Zuweisen (406) von verfügbaren Netzwerkkomponenten, wobei die Komponenten-QPLs aufweisen, die zumindest gleich der spezifizierten Slice-QPL sind;
- Senden (408) von Informationen, die die zugewiesenen Netzwerkkomponenten identifizieren, an die Netzwerk-Slice-Verwaltungsfunktion; und nach dem Senden:
- periodisches Bestimmen aktueller Komponenten-QPLs von Netzwerkkomponenten; und
- Senden der aktuellen Komponenten-QPLs an die Netzwerk-Slice-Verwaltungsfunktion.

7. Verfahren nach Anspruch 6, wobei das periodische Bestimmen von aktuellen Komponenten-QPLs mit einer Periodizität durchgeführt wird, die umgekehrt proportional von der spezifizierten Slice-QPL abhängt.

8. Verfahren nach einem der Ansprüche 6 bis 7, ferner umfassend Hinzufügen von QPLs von Netzwerkkomponenten zu Bereitstellungsvorlagen von Netzwerkkomponenten.

9. Verfahren (500) zum Betreiben einer Netzwerkkomponente eines zellularen Netzwerks, wobei das Verfahren von einer Kommunikationsnetzwerkvorrichtung durchgeführt wird, die die Netzwerkkomponente hostet, wobei das Verfahren Folgendes umfasst:
- Bestimmen (502) einer Komponenten-Quantenschutzstufe, Komponenten-QPL, der Netzwerkkomponente, wobei eine Komponenten-QPL eine Stufe von Schutz gegen einen von einem Quantencomputer ausgeführten Angriff angibt, die für die Netzwerkkomponente durch quantenresistente Technologie bereitgestellt wird, wenn die Netzwerkkomponente die quantenresistente Technologie verwendet; und
- Senden (504) der Komponenten-QPL an eine Netzwerk-Slice-Verwaltungsfunktion des zellularen Netzwerks.

10. Kommunikationsnetzwerkvorrichtung (600), die eine Netzwerk-Slice-Verwaltungsfunktion hostet, die zum Verwalten eines Netzwerk-Slices eines zellularen Netzwerks konfiguriert ist, wobei die Kommunikationsnetzwerkvorrichtung Schnittstellenschaltungsanordnung (602), mindestens einen Prozessor (604) und Speicher (606) umfasst, der Anweisungen (610) umfasst, die von dem mindestens einen Prozessor ausgeführt werden können, wodurch die Kommunikationsnetzwerkvorrichtung zu Folgendem ausgelegt ist:
- Empfangen einer Anforderung für einen Netzwerk-Slice, wobei die Anforderung eine spezifizierte Ende-zu-Ende-Slice-Quantenschutzstufe, Ende-zu-Ende-Slice-QPL, für den Netzwerk-Slice umfasst;
- Anfordern einer Zuweisung von Netzwerkkomponenten mit Komponenten-QPLs, die zumindest gleich der spezifizierten Slice-QPL sind, von einer Sicherheitsverwaltungsentität des zellularen Netzwerks, wobei eine Komponenten-QPL eine Stufe von Schutz gegen einen von einem Quantencomputer ausgeführten Angriff angibt, die für die Netzwerkkomponente durch quantenresistente Technologie bereitgestellt wird, wenn die Netzwerkkomponente die quantenresistente Technologie verwendet;
- Empfangen von Informationen, die zugewiesene Netzwerkkomponenten identifizieren, von der Sicherheitsverwaltungsentität;
- Instanziieren des Netzwerk-Slices unter Verwendung von Netzwerkkomponenten der zugewiesenen Netzwerkkomponenten; und
- nach der Instanziierung des Netzwerk-Slices periodisches Bestimmen einer aktuellen Slice-QPL des Netzwerk-Slices und Durchführen eines von Folgendem in Abhängigkeit von der aktuellen Slice-QPL:
- keine Aktion erforderlich;
- Durchführen aktiver Überwachung des Netzwerk-Slices und Starten von Aktionen zum Aktualisieren von Netzwerk-Slice-Komponenten, wenn die aktuelle Slice-QPL unter einem Slice-QPL-Schwellenwert liegt;
- Informieren eines Dienstanbieters, der den Netzwerk-Slice anfordert, dass die aktuelle Netzwerk-Slice-QPL niedriger als die spezifizierte Slice-QPL ist; und
- Stoppen des Betriebs des Netzwerk-Slices und Verschieben des Dienstes, der den Netzwerk-Slice verwendet, zu einem anderen Slice mit einer Slice-QPL, die zumindest gleich der spezifizierten Slice-QPL ist.

11. Kommunikationsnetzwerkvorrichtung (700), die eine Sicherheitsverwaltungsentität hostet, die zum Orchestrieren von Netzwerk-Slices in einem zellularen Netzwerk konfiguriert ist, wobei die Netzwerk-Slices aus verfügbaren Netzwerkkomponenten erstellt werden, die Kommunikationsnetzwerkvorrichtung Schnittstellenschaltungsanordnung (702), mindestens einen Prozessor (704) und Speicher (706) umfasst, der Anweisungen (710) umfasst, die von dem mindestens einen Prozessor ausgeführt werden können, wodurch die Kommunikationsnetzwerkvorrichtung zu Folgendem ausgelegt ist:
- Bestimmen von Komponenten-Quantenschutzstufen, Komponenten-QPLs, von Netzwerkkomponenten, wobei eine Komponenten-QPL eine Stufe von Schutz gegen einen von einem Quantencomputer ausgeführten Angriff angibt, die für die Netzwerkkomponente durch quantenresistente Technologie bereitgestellt wird, wenn die Netzwerkkomponente die quantenresistente Technologie verwendet;
- Empfangen einer Anforderung zur Zuweisung von Netzwerkkomponenten mit Komponenten-QPLs, die zumindest gleich einer spezifizierten Slice-QPLs sind, von einer Netzwerk-Slice-Verwaltungsfunktion des zellularen Netzwerks;
- Zuweisen von verfügbaren Netzwerkkomponenten, wobei die Netzwerkkomponenten Komponenten-QPLs aufweisen, die zumindest gleich der spezifizierten Slice-QPL sind;
- Senden von Informationen, die die zugewiesenen Netzwerkkomponenten identifizieren, an die Netzwerk-Slice-Verwaltungsfunktion; und nach dem Senden:
- periodisches Bestimmen aktueller Komponenten-QPLs von Netzwerkkomponenten; und
- Senden der aktuellen Komponenten-QPLs an die Netzwerk-Slice-Verwaltungsfunktion.

12. Kommunikationsnetzwerkvorrichtung (750), die eine Netzwerkkomponente hostet, wobei die Kommunikationsnetzwerkvorrichtung Schnittstellenschaltungsanordnung (752), mindestens einen Prozessor (754) und Speicher (756) umfasst, der Anweisungen (760) umfasst, die von dem mindestens einen Prozessor ausgeführt werden können, wodurch die Kommunikationsnetzwerkvorrichtung zu Folgendem ausgelegt ist:
- Bestimmen einer Komponenten-Quantenschutzstufe, Komponenten-QPL, der Netzwerkkomponente, wobei eine Komponenten-QPL eine Stufe von Schutz gegen einen von einem Quantencomputer ausgeführten Angriff angibt, die für die Netzwerkkomponente durch quantenresistente Technologie bereitgestellt wird, wenn die Netzwerkkomponente die quantenresistente Technologie verwendet;
- Senden der Komponenten-QPL an eine Netzwerk-Slice-Verwaltungsfunktion des zellularen Netzwerks; und nach dem Senden:
- periodisches Bestimmen aktueller Komponenten-QPLs von Netzwerkkomponenten; und
- Senden der aktuellen Komponenten-QPLs an die Netzwerk-Slice-Verwaltungsfunktion.

13. Computerprogramm (608), umfassend Anweisungen (610), die bei Ausführung auf mindestens einem Prozessor den mindestens einen Prozessor zum Durchführen des Verfahrens nach einem der Ansprüche 1 bis 5 veranlassen.

14. Computerprogramm (708), umfassend Anweisungen (710), die bei Ausführung auf mindestens einem Prozessor den mindestens einen Prozessor zum Durchführen des Verfahrens nach einem der Ansprüche 6 bis 8 veranlassen.

15. Computerprogramm (758), umfassend Anweisungen (760), die bei Ausführung auf mindestens einem Prozessor den mindestens einen Prozessor zum Durchführen des Verfahrens nach Anspruch 9 veranlassen.

## Revendications

1. Procédé (100, 200, 300) de fonctionnement d'une fonction de gestion de tranche de réseau configurée pour gérer une tranche de réseau d'un réseau cellulaire, le procédé étant réalisé par un dispositif de réseau de communication hébergeant la fonction de gestion de tranche de réseau, le procédé comprenant :
- la réception (102, 202) d'une demande d'une tranche de réseau, la demande incluant un niveau de protection quantique, QPL, de bout-à-bout spécifié pour la tranche de réseau ;
- la demande (104, 204), depuis une entité de gestion de sécurité du réseau cellulaire, d'une allocation de composants de réseau présentant des QPL de composants au moins égaux au QPL de tranche spécifié, un QPL de composant indiquant un niveau de sécurité, contre une attaque engagée par un ordinateur quantique, fourni au composant de réseau par une technologie de résistance aux attaques quantiques lorsque le composant de réseau utilise la technologie de résistance aux attaques quantiques ;
- la réception (106, 206), depuis l'entité de gestion de sécurité, d'informations identifiant des composants de réseau alloués ;
- l'instanciation (108, 212) de la tranche de réseau à l'aide de composants de réseau parmi les composants de réseau alloués ; et
- à la suite de **l'instanciation** de la tranche de réseau, la détermination périodique **d'un** QPL de tranche actuel de la tranche de réseau et la réalisation de l'un de ce qui suit en fonction du QPL de tranche actuel :
- aucune action requise ;
- réaliser une surveillance active de la tranche de réseau et démarrer des actions pour mettre à jour des composants de tranche de réseau lorsque le QPL de tranche actuel est inférieur à une valeur de seuil de QPL de tranche ;
- informer un fournisseur de services demandant la tranche de réseau que le QPL de tranche de réseau actuel est inférieur au QPL de tranche spécifié ; et
- arrêter le fonctionnement de la tranche de réseau et déplacer un service utilisant la tranche de réseau vers une autre tranche présentant un QPL de tranche au moins égal au QPL de tranche spécifié.

2. Procédé selon la revendication 1, comprenant en outre :
- la réception (206), depuis l'entité de gestion de sécurité, d'informations indiquant des QPL de composants des composants de réseau alloués ; et
- la détermination (208) d'un QPL de tranche de la tranche de réseau sur la base d'un QPL de composant le plus bas des composants de réseau de la tranche de réseau instanciée.

3. Procédé selon l'une quelconque des revendications 1 et 2, comprenant en outre :
- en réponse à la réception de la demande d'une tranche de réseau, la recherche (302), parmi des tranches de réseau existantes, d'une tranche de réseau présentant un QPL de tranche au moins égal au QPL de tranche spécifié ;
- en réponse à la découverte (304), dans la recherche, d'une tranche de réseau présentant un QPL de tranche au moins égal au QPL de tranche spécifié, l'attribution (214) de ladite tranche de réseau en réponse à ladite demande d'une tranche de réseau ; et
- en réponse à la non-découverte d'une tranche de réseau présentant un QPL de tranche au moins égal au QPL de tranche spécifié, le passage à ladite demande (204), depuis une entité de gestion de sécurité du réseau cellulaire, d'une allocation de composants de réseau pour instancier la tranche de réseau demandée.

4. Procédé selon l'une quelconque des revendications 1 à 3, dans lequel la demande d'une tranche de réseau est l'un parmi un message de demande d'enregistrement incluant un différenciateur de tranche contenant le QPL de tranche spécifié et un message d'informations d'aide à la sélection de tranche de réseau, N-NSSAI, abonné incluant un différenciateur de tranche contenant le QPL de tranche spécifié.

5. Procédé selon l'une quelconque des revendications 1 à **4,** dans lequel la détermination périodique d'un QPL de tranche actuel de la tranche de réseau comprend :
- la réception périodique de QPL de composants actuels de composants de réseau de la tranche de réseau ; et
- la détermination du QPL de tranche actuel de la tranche de réseau sur la base d'un QPL de composant le plus bas parmi les QPL de composants actuels reçus.

6. Procédé (400) de fonctionnement d'une entité de gestion de sécurité configurée pour orchestrer des tranches de réseau dans un réseau cellulaire, dans lequel les tranches de réseau sont générées à partir de composants de réseau, le procédé étant réalisé par un dispositif de réseau de communication hébergeant l'entité de gestion de sécurité, le procédé comprenant :
- la détermination (402) de niveaux de protection quantique, QPL, de composants de composants de réseau, un QPL de composant indiquant un niveau de sécurité, contre une attaque engagée par un ordinateur quantique, fourni au composant de réseau par une technologie de résistance aux attaques quantiques lorsque le composant de réseau utilise la technologie de résistance aux attaques quantiques ;
- la réception (404), depuis une fonction de gestion de tranche de réseau du réseau cellulaire, d'une demande d'allocation de composants de réseau présentant des QPL de composants au moins égaux à un QPL de tranche spécifié ;
- l'allocation (406), parmi des composants de réseau disponibles, de composants de réseau présentant des QPL de composants au moins égaux au QPL de tranche spécifié ;
- l'envoi (408), à la fonction de gestion de tranche de réseau, d'informations identifiant les composants de réseau alloués ; et après ledit envoi :
- la détermination périodique de QPL de composants actuels de composants de réseau ; et
- l'envoi des QPL de composants actuels à la fonction de gestion de tranche de réseau.

7. Procédé selon la revendication 6, dans lequel la détermination périodique de QPL de composants actuels est réalisée avec une périodicité inversement proportionnelle au QPL de tranche spécifié.

8. Procédé selon l'une quelconque des revendications 6 et 7, comprenant en outre l'ajout de QPL de composants de réseau à des modèles de déploiement de composants de réseau.

9. Procédé (500) de fonctionnement d'un composant de réseau d'un réseau cellulaire, le procédé étant réalisé par un dispositif de réseau de communication hébergeant le composant de réseau, le procédé comprenant :
- la détermination (502) d'un niveau de protection quantique, QPL, de composant du composant de réseau, le QPL de composant indiquant un niveau de sécurité, contre une attaque engagée par un ordinateur quantique, fourni au composant de réseau par une technologie de résistance aux attaques quantiques lorsque le composant de réseau utilise la technologie de résistance aux attaques quantiques ; et
- l'envoi (504) du QPL de composant à une fonction de gestion de tranche de réseau du réseau cellulaire.

10. Dispositif de réseau de communication (600) hébergeant une fonction de gestion de tranche de réseau configurée pour gérer une tranche de réseau d'un réseau cellulaire, le dispositif de réseau de communication comprenant une circuiterie d'interface (602), au moins un processeur (604) et une mémoire (606) comprenant des instructions (610) exécutables par l'au moins un processeur selon lesquelles la fonction de gestion de tranche de réseau est fonctionnelle pour :
- recevoir une demande d'une tranche de réseau, la demande incluant un niveau de protection quantique, QPL, de bout-à-bout spécifié pour la tranche de réseau ;
- demander, depuis une entité de gestion de sécurité du réseau cellulaire, une allocation de composants de réseau présentant des QPL de composants au moins égaux au QPL de tranche spécifié, un QPL de composant indiquant un niveau de sécurité, contre une attaque engagée par un ordinateur quantique, fourni au composant de réseau par une technologie de résistance aux attaques quantiques lorsque le composant de réseau utilise la technologie de résistance aux attaques quantiques ;
- recevoir, depuis l'entité de gestion de sécurité, des informations identifiant des composants de réseau alloués ;
- instancier la tranche de réseau à l'aide de composants de réseau parmi les composants de réseau alloués ; et
- à la suite de l'instanciation de la tranche de réseau, déterminer périodiquement un QPL de tranche actuel de la tranche de réseau et réaliser l'un de ce qui suit en fonction du QPL de tranche actuel :
- aucune action requise ;
- réaliser une surveillance active de la tranche de réseau et démarrer des actions pour mettre à jour des composants de tranche de réseau lorsque le QPL de tranche actuel est inférieur à une valeur de seuil de QPL de tranche ;
- informer un fournisseur de services demandant la tranche de réseau que le QPL de tranche de réseau actuel est inférieur au QPL de tranche spécifié ; et
- arrêter le fonctionnement de la tranche de réseau et déplacer un service utilisant la tranche de réseau vers une autre tranche présentant un QPL de tranche au moins égal au QPL de tranche spécifié.

11. Dispositif de réseau de communication (700) hébergeant une entité de gestion de sécurité configurée pour orchestrer des tranches de réseau dans un réseau cellulaire, dans lequel les tranches de réseau sont générées à partir de composants de réseau disponibles, le dispositif de réseau de communication comprenant une circuiterie **d'interface** (702), au moins un processeur (704) et une mémoire (706) comprenant des instructions (710) exécutables par l'au moins un processeur selon lesquelles l'entité de gestion de sécurité est fonctionnelle pour :
- déterminer des niveaux de protection quantique, QPL, de composants de composants de réseau, un QPL de composant indiquant un niveau de sécurité, contre une attaque engagée par un ordinateur quantique, fourni au composant de réseau par une technologie de résistance aux attaques quantiques lorsque le composant de réseau utilise la technologie de résistance aux attaques quantiques ;
- recevoir, depuis une fonction de gestion de tranche de réseau du réseau cellulaire, une demande d'allocation de composants de réseau présentant des QPL de composants au moins égaux à un QPL de tranche spécifié ;
- allouer, parmi des composants de réseau disponibles, des composants de réseau présentant des QPL de composants au moins égaux au QPL de tranche spécifié ;
- envoyer, à la fonction de gestion de tranche de réseau, des informations identifiant les composants de réseau alloués ; et après ledit envoi :
- déterminer périodiquement des QPL de composants actuels de composants de réseau ; et
- envoyer les QPL de composants actuels à la fonction de gestion de tranche de réseau.

12. Dispositif de réseau de communication (750) hébergeant un composant de réseau, le dispositif de réseau de communication comprenant une circuiterie d'interface (752), au moins un processeur (754) et une mémoire (756) comprenant des instructions (760) exécutables par l'au moins un processeur selon lesquelles le composant de réseau est fonctionnel pour :
- déterminer un niveau de protection quantique, QPL, de composant du composant de réseau, le QPL de composant indiquant un niveau de sécurité, contre une attaque engagée par un ordinateur quantique, fourni au composant de réseau par une technologie de résistance aux attaques quantiques lorsque le composant de réseau utilise la technologie de résistance aux attaques quantiques ;
- envoyer le QPL de composant à une fonction de gestion de tranche de réseau du réseau cellulaire ; et après ledit envoi :
- déterminer périodiquement des QPL de composants actuels de composants de réseau ; et
- envoyer les QPL de composants actuels à la fonction de gestion de tranche de réseau.

13. Programme informatique (608) comprenant des instructions (610) qui, lorsqu'elles sont exécutées sur au moins un processeur, amènent l'au moins un processeur à réaliser le procédé selon l'une quelconque des revendications 1 à 5.

14. Programme informatique (708) comprenant des instructions (710) qui, lorsqu'elles sont exécutées sur au moins un processeur, amènent l'au moins un processeur à réaliser le procédé selon l'une quelconque des revendications 6 à 8.

15. Programme informatique (758) comprenant des instructions (760) qui, lorsqu'elles sont exécutées sur au moins un processeur, amènent l'au moins un processeur à réaliser le procédé selon la revendication 9.
